# EUROPÄISCHE PATENTSCHRIFT

(11) **EP 0 881 811 B1**
(45) Veröffentlichungstag und Bekanntmachung des Hinweises auf die Patenterteilung: **21.06.2006**
(21) Anmeldenummer: 98107897.5
(22) Anmeldetag: 30.04.1998
(51) Int. Cl.: H04M 1/27

(54) **Verfahren und Anordnung für ein sprachgesteuertes Kommunikationsendgerät mit gegen unbeabsichtigte Verfälschungen gesicherter akustischer Bedienerführung**
User voice guidance device and method for preventing unintentional errors when using a voice controlled communication terminal
Méthode et dispositif d'assistance vocale d'assistance vocale pour prévenir les erreurs involontaires de l'utilisateur d'un terminal de communication à commande vocale

(30) Priorität: 30.05.1997 DE 19722784
(43) Veröffentlichungstag der Anmeldung: 02.12.1998
(73) Patentinhaber: Deutsche Telekom AG, 53113 Bonn (DE)
(72) Erfinder: Lochschmidt, Bernd, Dr.-Ing., 64395 Brensbach (DE); Rossmy, Hartmut, Dipl.-Ing., 13125 Berlin (DE); Seidelmann, Constanze, Dipl.-Ing., 64319 Pfungstadt (DE); Naumburger, Volkmar, Dr., 15537 Erkner (DE); Zimmer, Hellmar, Dr., 12587 Berlin (DE)

(56) Entgegenhaltungen:
- WO-A-93/13518
- US-A- 5 125 024
- US-A- 5 475 791
- US-A- 5 548 681

## Beschreibung

Die erfindungsgemäße Lösung bezieht sich auf Kommunikationsendgeräte, die über eine sprachgesteuerte Benutzerführung verfügen. Mittels der erfindungsgemäßen Lösung sollen zwei Probleme gelöst werden, die in unmittelbarem Zusammenhang stehen. Erstens soll der Benutzer vor unbeabsichtigtem Abbruch während der sprachgesteuerten Bedienerführung geschützt werden, zweitens sollen auch die Texte bzw. Sprachprompts der akustischen Bedienerführung des Kommunikationsendgerätes gegen Verfälschungen oder Verstümmelungen geschützt werden, die zumeist durch einen unbeabsichtigten Abbruch während der Bedienerführung bewirkt werden.

Neben den bekannten technischen Lösungen für Kommunikationsendgeräte, die über eine Tastatur bedient werden und deren Rückmeldungen ggf. über ein Display erfolgen, existiert eine andere Gruppe bekannter technischer Lösungen, die auf der Gerätesteuerung mit sprachlichen Mitteln basieren. Die zur ersten Gruppe gehörenden Kommunikationsendgeräte erfordern zu ihrer Bedienung (Verbindungsaufbau) die numerische Eingabe der gewünschten Rufnummer über eine Tastatur. Dies setzt immer eine Zuordnung von gewünschtem Teilnehmer und assoziierter Rufnummer voraus. Bei jedem Verbindungsaufbau ist diese Zuordnung neu aus dem Gedächtnis zu reproduzieren.

Bei modernen Kommunikationsendgeräten kann der Name des gewünschten Teilnehmers in alphabetischer Form eingegeben werden, wobei die Assoziation zur Rufnummer im Kommunikationsendgerät gespeichert ist. In jedem Fall ist der Bedienaufwand hoch. Noch aufwendiger ist die Benutzung von Diensteangeboten wie Konferenzschaltung, Weiterleiten etc. über die Tastatur des Kommunikationsendgerätes zu bewerkstelligen, weil dann noch spezielle Tastenkombinationen gemerkt und ausgeführt werden müssen. Diese Mängel können durch die Gruppe der sprachgesteuerten Endgeräte umgangen werden. Bei sprachgesteuerten Kommunikationsendgeräten werden die Namen der gewünschten Teilnehmer sowie die Bedienkommandos durch den Benutzer als sprachliche Kommandos ausgeführt. Da aber die Kommunikationsendgeräte dieser Gruppe nicht zwingend ein Display zur optischen Rückmeldung aufweisen müssen, wobei dies im Fernbedienungsfall ohnehin nicht möglich ist, werden die Rückmeldungen des Kommunikationsendgerätes an den Bediener ebenfalls in sprachlicher Form ausgeführt. Diese Sprachprompts genannten Bedienungsanweisungen können recht umfangreich sein und dadurch zu einer drastischen Verlangsamung des Bediendialogs führen, zumal während des Bediendialogs ohnehin mehrere Sprachprompts zur Ausführung gelangen. Verschiedene Lösungen umgehen diesen Mangel, indem durch eine intensitätsabhängige Steuerung, die vom Ausgangssignal des Bedienmikrofons abgeleitet wird, die Wiedergabe des Sprachprompts abgebrochen wird, wenn der Benutzer während dieser Zeit spricht. Für geübte Benutzer ist dies eine geeignete Methode, den Dialog zu verkürzen. Für ungeübte Benutzer birgt dieses Verfahren die Gefahr des vorzeitigen Abbruchs, wenn der Benutzer beabsichtigt oder unbeabsichtigt in die Wiedergabe eines Sprachpromts hineinspricht, so wie er es bei einem Dialog von Mensch zu Mensch auch täte. Dann wird der zum Verständnis notwendige Bedientext verstümmelt, und der Benutzer wird dadurch irritiert.

US 5,125,024 beschreibt ein Verfahren für ein Telekommunikationsendgerät mit gegen unbeabsichtigte Verfälschung gesicherter akustischer Bedienerführung. Während der Lautsprecherwiedergabe eines gespeicherten Sprachprompts wird über einen Spracherkenner ständig das Ausgangssignal des Mikrofons des Kommunikationsendgerätes auf das Auftreten von Schlüsselworten, die für den Abbruch der Wiedergabe des ausgegebenen Sprachprompts gespeichert sind, überwacht. Nach korrekter Erkennung eines Schlüsselwortes erfolgt der Abbruch des Sprachprompts.

Aus US 5,548,681 ist ein Sprachdialogsystem für den Dialog zwischen Nutzer und System bekannt, das auf einer laut-oder silbenweisen Segmentierung des Sprachsignals eines Sprachprompts basiert. Dies ist naheliegend, da die Promptproduktion bei dieser Lösung auf der Basis synthetischer Sprache erfolgt.

Die erfindungsgemäße Lösung ist darauf ausgerichtet, den Benutzer vor unbeabsichtigtem Abbruch der Ausgabe der Sprachprompts während der Bedienerführung zu schützen, sowie die Wiedergabe der Sprachprompts vor durch den Benutzer nicht gewollte Veränderungen oder Verstümmelungen zu schützen.

Der Erfindung liegt ein Verfahren und eine Anordnung zugrunde, welche die Bedienerführung, insbesondere aber die für die Bedienerführung gespeicherten Sprachprompts gegen unbeabsichtigte Verfälschungen schützt.
Das erfindungsgemäße Verfahren beruht darauf, daß während der Wiedergabe eines Sprachprompts parallel ständig ein Spracherkenner (wordspotting) aktiv ist. Dieser Spracherkenner überwacht während der Zeit des Dialogs Mensch/Kommunikationsendgerät den Mikrofonausgang des Kommunikationsendgerätes. Damit wird sichergestellt, daß nicht nur die bloße Intensität des Mikrofonausgangssignals zu einem Abbruch der Wiedergabe des Sprachprompts führt, sondern nur ein korrekt erkanntes Wort. Um weiterhin sicherzustellen, daß nicht jedes Wort, wie beispielsweise eine unbeabsichtigte Bemerkung, schon einen Abbruch der Wiedergabe des Sprachprompts bewirkt, wird die Zahl der zu einem Abbruch führenden Worte (Kommandos) auf eine kleine Anzahl definierter Schlüsselworte eingeschränkt. Dabei spielt das gewählte Spracherkennungsverfahren (sprecherabhängige oder sprecherunabhängige Spracherkennung) keine Rolle. Um im Falle eines beabsichten Abbruchs der Wiedergabe eines Sprachprompts eine dem natürlichen Sprechverhalten ähnliche Beendigung der Wiedergabe zu erreichen, erfolgt der Abbruch erfindungsgemäß nicht mitten im Wort oder einer Sprecheinheit (durch die natürliche Sprechrhythmik vorgegebene Phrasierung), sondern an bestimmten erlaubten Fügestellen des jeweiligen Sprachprompts. Diese Fügestellen werden als Marke bei der Abspeicherung der Sprachprompts mit eingegeben. Bei der Wiedergabe wird immer die gerade aktive Sprecheinheit bis zur markierten Fügestelle ausgegeben, und erst dann abgebrochen.

Weiterhin wird erfindungsgemäß mittels Echokompensation die unerwünschte Rückwirkung des wiedergegebenen Sprachprompts auf den Mikrofoneingang verhindert. Damit wird unterbunden, daß zufällig im Sprachprompt enthaltene Schlüsselworte auf den Eingang des Spracherkenners gelangen und so unbeabsichtigt zu einem Abbruch des Sprachprompts führen. Ohne eine solche Einrichtung wäre der Betrieb des Endgerätes im Freisprechmodus unmöglich.

Die erfindungsgemäße Anordnung besteht aus einem am Mikrofon 1 des Kommunikationsendgerätes angeschalteten Spracherkenner 2 und einer am Lautsprecher 4 des Kommunikationsendgerätes angeschalteten Sprachausgabeeinrichtung 3, bei der die Überwachung des Mikrofonausgangssignals des Mikrofons 1 des Kommunikationsendgerätes auf das Auftreten von Schlüsselworten über den Spracherkenner 2 erfolgt. Der **Spracherkenner** 2 ist mit einem Schlüsselwortspeicher 8 verbunden, in dem definierte Schlüsselworte gespeichert sind, die für den Abbruch der Sprachprompts erlaubt sind. Nach Erkennen eines Schlüsselwortes durch den Spracherkenner 2 wird über den mit dem Spracherkenner 2 verbundenen Markenindikator 6 die Sprachausgabeeinrichtung 3 mit dem Speicher für Sprachprompts 5 zur Unterbrechung des aktuellen Sprachprompts angesteuert. Die Unterbrechung der Ausgabe des aktuellen Sprachprompts erfolgt dabei an einer im Sprachprompt für den Abbruch bereits gespeicherten und markierten Fügestelle. Die Fügestelle ist dabei so ausgebildet, dass sie eine dem natürlichen Sprachverhalten ähnliche Beendigung der Ausgabe des aktuellen Sprachprompts ermöglicht.

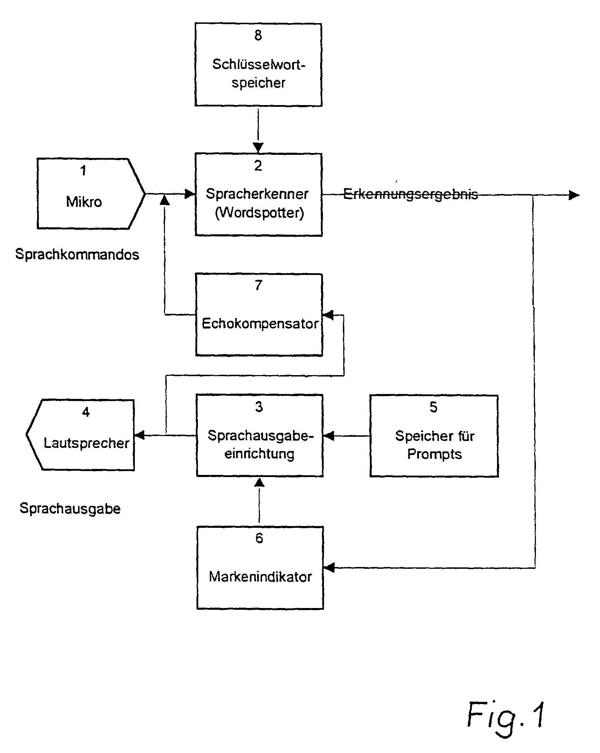

Die erfindungsgemäße Lösung wird nachfolgend an einem Ausführungsbeispiel näher erläutert. Die zugehörige Zeichnung zeigt anhand einer Blockschaltung das Wirkprinzip der erfindungsgemäßen Lösung (Fig. 1). Das vom Mikrofon 1 empfangene Sprachsignal wird dem Spracherkenner 2 zugeführt, wobei das vom Echokompensator 7 bewertete Ausgangssignal der Sprachausgabeeinrichtung 3 vom Eingangssignal subtrahiert wird, um so den ungewollten Einfluß der akustischen Rückwirkungen des Ausgangssignals auf das Eingangssignal aufzuheben. Die Sprachausgabeeinrichtung 3 dient der Wiedergabe der im Sprachspeicher 5 gespeicherten Sprachprompts. Das Ausgangssignal der Sprachausgabeeinrichtung 3 wird auf die Wiedergabeeinrichtung 4 (z. B. Lautsprecher) und den Eingang des Echokompensators 7 geführt. Im Echokompensator erfolgt eine Bewertung des Ausgangssignals so, daß der über den akustischen Pfad vom Lautsprecher 4 zum Mikrofon 1 gelangende Anteil des Ausgangssignals zum größten Teil kompensiert wird. Der Spracherkenner 2 erhält den Vorrat der erlaubten Schlüsselworte, die zum Abbruch der Wiedergabe der Sprachprompts führen dürfen, aus dem Schlüsselwortspeicher 8. Wird nun ein sprachlich eingegebenes erlaubtes Schlüsselwort vom Spracherkenner 2 erkannt, so wird dieses Resultat auf den Markenindikator 6 geleitet, der die Beendigung der Wiedergabe des Sprachprompts einleitet. Die Wiedergabe wird aber erst dann beendet, wenn vom Markenindikator 6 die Marke der nächsten in Frage kommenden Fügestelle erkannt wurde, daß die gerade aktuelle Sprecheinheit des Sprachprompts abgeschlossen wurde. Dazu wird ein entsprechendes Halt-Signal an die Sprachausgabeeinrichtung 3 ausgegeben.

Die erfindungsgemäße Lösung wird in Kommunikationsendgeräten eingesetzt, die über eine sprachgesteuerte Benutzerführung verfügen.

Aufstellung der verwendeten Bezugszeichen
- 1: Mikrofon
- 2: Spracherkenner (Wordspotter)
- 3: Sprachausgabeeinrichtung
- 4: Lautsprecher
- 5: Speicher für Sprachprompts
- 6: Markenindikator
- 7: Echokompensator
- 8: Schlüsselwortspeicher

## Patentansprüche

1. Verfahren für ein sprachgesteuertes Kommunikationsendgerät mit gegen unbeabsichtigte Verfälschungen gesicherter akustischer Bedienerführung, bei dem während der Lautsprecherwiedergabe eines gespeicherten Sprachprompts über einen Spracherkenner (2) ständig das Ausgangssignal des Mikrofons (1) des Kommunikationsendgerätes auf das Auftreten von Schlüsselworten, die für den Abbruch der Wiedergabe des ausgegebenen Sprachprompts gespeichert sind, überwacht wird, **dadurch gekennzeichnet, daß** nach korrekter Erkennung eines Schlüsselwortes der Abbruch der Ausgabe des aktiven Sprachprompts an einer im Sprachprompt gespeicherten Fügestelle erfolgt, welche durch die Phrasierung im Rahmen der natürlichen Sprechrhythmik definiert ist, wobei der gerade aktive Sprachprompt immer bis zur nächsten markierten Fügestelle ausgegeben wird.

2. Verfahren nach Anspruch 1, **dadurch gekennzeichnet, daß** zur Vermeidung des unnötigen Abbruchs des Sprachprompts durch ein im Sprachprompt vorkommendes Wort, das mit einem für den Abbruch der Ausgabe des Sprachprompts gespeicherten Schlüsselwort identisch ist, mittels Echokompensation eine Rückwirkung des über Lautsprecher (4) wiedergegebenen Sprachprompts auf den Eingang des Mikrofons (1) verhindert wird.

3. Anordnung für ein sprachgesteuertes Kommunikationsendgerät mit gegen unbeabsichtigte Verfälschungen gesicherter akustischer Bedienerführung, bestehend aus einem am Mikrofon (1) des Kommunikationsendgerätes angeschalteten Spracherkenner (2) und einer am Lautsprecher (4) des Kommunikationsendgerätes angeschalteten Sprachausgabeeinrichtung (3), bei der die Überwachung des Mikrofonausgangssignals des Mikrofons (1) des Kommunikationsendgerätes auf das Auftreten von Schlüsselworten über den Spracherkenner (2) erfolgt,
**dadurch gekennzeichnet, daß** der Spracherkenner (2) mit einem Schlüsselwortspeicher(8) verbunden ist, in dem definierte Schlüsselworte gespeichert sind, die für den Abbruch der Sprachprompts erlaubt sind, daß nach Erkennen eines Schlüsselwortes durch den Spracherkenner(2) über den mit dem Spracherkenner (2) verbundenen Markenindikator (6), die Sprachausgabeeinrichtung (3) mit dem Speicher für Sprachprompts (5) zur Unterbrechung des aktuellen Sprachprompts angesteuert wird, wobei die Unterbrechung der Ausgabe des aktuellen Sprachprompts an einer im Sprachpromt für den Abbruch bereits gespeicherten und markierten Fügestelle erfolgt, die so ausgebildet ist, daß sie eine dem natürlichen Sprechverhalten ähnliche Beendigung der Ausgabe des aktuellen Sprachpromptes ermöglicht.

4. Anordnung nach Anspruch 3, **dadurch gekennzeichnet, daß** zur Vermeidung von ungewollten akustischen Rückwirkungen zwischen dem Eingang des Lautsprechers (4) und dem Ausgang des Mikrofons (1) ein Echokompensator (7) angeordnet ist.

## Claims

1. Method for a voice-controlled communications terminal device with an acoustic user interface protected from unintentional misreading, wherein during the loudspeaker playback of a stored voice prompt, the output signal of the microphone (1) of the communications terminal device is continuously monitored by a speech recognition unit (2) for the occurrence of keywords stored for the termination of the playback of the voice prompt being played, **characterized in that** upon successful recognition of a keyword, termination of playback of the active voice prompt takes place at a stored connecting point in the voice prompt defined by the phrasing as part of the natural speech rhythm, with the currently active voice prompt always being played up to the next connecting point.

2. Method according to claim 1, **characterized in that**, to avoid unnecessary termination of the voice prompt due to the occurrence in the voice prompt of a word that is identical to one of the keywords stored for termination of the playing of the voice prompt, feedback from the voice prompt played back through the loudspeaker (4) to the input of the microphone (1) is prevented by means of echo compensation.

3. Arrangement for a voice-controlled communications terminal device with an acoustic user interface protected from unintentional misreading, comprising a speech recognition unit (2) connected to the microphone (1) of the communications terminal device and a speech output device (3) connected to the loudspeaker (4) of the communications terminal device, wherein the microphone output signal of the microphone (1) of the communications terminal device is monitored by the speech recognition unit (2) for the occurrence of keywords, **characterized in that** the speech recognition unit (2) is connected to a keyword memory (8) in which are stored defined keywords that are permitted for termination of the voice prompt, **in that** upon recognition of a keyword by the speech recognition unit (2) the speech output device (3) having the memory for voice prompts (5) is controlled by the mark indicator (6) connected to the speech recognition unit (2) so as to terminate the current voice prompt, said termination of the playing of the current voice prompt taking place at a connecting point previously stored and marked in the voice prompt for said termination, said connecting point being designed such that it permits a termination of the playing of the current voice prompt that is similar to the natural pattern of speech.

4. Arrangement according to claim 3, **characterized in that** an echo compensator (7) is arranged between the input of the loudspeaker (4) and the output of the microphone (1) to avoid undesirable acoustic feedback.

## Revendications

1. Procédé pour un terminal de communication à commande vocale avec surface utilisateur acoustique sécurisée contre des falsifications involontaires, au cours duquel, pendant la reproduction par haut-parleur d'un prompt vocal mémorisé, un reconnaisseur de parole.(2) surveille en permanence le signal de sortie du microphone (1) du terminal de communication afin de détecter la survenance de mots clés mémorisés pour l'interruption de la reproduction du prompt vocal en cours de lecture, **caractérisé en ce qu'**après une identification correcte d'un mot clé, l'interruption de la reproduction du prompt vocal actif s'effectue à un point de jonction stocké dans le prompt vocal et défini par le phrasé dans le cadre de la rythmique vocale naturelle, le prompt vocal actif étant toujours sorti jusqu'au prochain point de jonction marqué.

2. Procédé selon la revendication 1, **caractérisé en ce que** pour éviter l'interruption inutile du prompt vocal par un mot survenant dans le prompt vocal qui est identique à un mot clé mémorisé pour l'interruption de la reproduction du prompt vocal, une répercussion du prompt vocal reproduit par haut-parleur (4) sur l'entrée du microphone (1) est évitée par compensation d'écho.

3. Dispositif pour un terminal de commmincation à commande vocale avec surface utilisateur acoustique sécurisée contre des falsifications involontaires, se composant d'un reconnaisseur vocal (2) branché sur le microphone (1) du terminal de communication et d'un dispositif de sortie vocale (3) branché sur le haut-parleur (4) du terminal de communication dans lequel le reconnaisseur vocal (2) effectue la surveillance du signal de sortie du microphone (1) du terminal de communication pour détecter la survenance de mots clés,
**caractérisé en ce que** le reconnaisseur vocal (2) est relié à une mémoire de mots clés (8) dans laquelle sont stockés des mots clés définis qui sont autorisés pour l'interruption de la reproduction des prompts vocaux, qu'après la reconnaissance d'un mot clé par le reconnaisseur vocal (2), le dispositif de sortie vocale (3) avec la mémoire pour des prompts vocaux (5) est commandé par l'intermédiaire de l'indicateur de marque (6) relié au reconnaisseur vocal (2) en vue de la suspension du prompt vocal en cours, la suspension de la sortie du prompt vocal en cours s'effectuant à un point de jonction déjà marqué et mémorise dans le prompt vocal pour son interruption, point de jonction qui est configuré de manière à permettre un achèvement de la sortie du prompt vocal en cours de manière similaire à celui du discours naturel.

4. Dispositif selon la revendication 3, **caractérisé en ce qu'**un compensateur d'écho (7) est disposé entre l'entrée du haut-parleur (4) et la sortie du microphone (1) pour éviter des répercussions acoustiques involontaires.
